# EUROPÄISCHE PATENTSCHRIFT

(11) **EP 1 483 482 B1**
(45) Veröffentlichungstag und Bekanntmachung des Hinweises auf die Patenterteilung: **20.08.2008**
(21) Anmeldenummer: 03714672.7
(22) Anmeldetag: 05.03.2003
(51) Int. Cl.: F01D 9/04

(54) **LEITSCHAUFELBEFESTIGUNG IN EINEM STRÖMUNGSKANAL EINER FLUGGASTURBINE**
GUIDE BLADE FIXTURE IN A FLOW CHANNEL OF AN AIRCRAFT GAS TURBINE
FIXATION D'UNE AUBE DIRECTRICE DANS LE CANAL D'ECOULEMENT D'UNE TURBINE A GAZ D'AVION

(30) Priorität: 12.03.2002 DE 10210866
(43) Veröffentlichungstag der Anmeldung: 08.12.2004
(73) Patentinhaber: MTU Aero Engines GmbH, 80995 München (DE)
(72) Erfinder: BÖCK, Alexander, 82288 Kottgeisering (DE)
(86) Internationale Anmeldenummer: PCT/DE2003/000686
(87) Internationale Veröffentlichungsnummer: WO 2003/076768

(56) Entgegenhaltungen:
- EP-A- 1 039 096
- GB-A- 2 260 789
- US-A- 4 384 822

## Beschreibung

Die Erfindung betrifft eine Anordnung zur Befestigung eines einen Teil eines Übergangskanals bildenden Leitschaufelsegmentes, gemäß dem Oberbegriff des Patentanspruchs 1.

Moderne Fluggasturbinen umfassen häufig ein sogenanntes Kerntriebwerk mit einer Hochdruckturbine relativ kleinen Durchmessers, der eine Niederdruckturbine mit relativ großem Durchmesser nachgeschaltet ist. Es besteht daher die Notwendigkeit, den die Gasturbine durchsetzenden, mit Leitschaufeln ausgestatteten Ringkanal hinter der Hochdruckturbine von dessen kleinem Durchmesser auf den großen Durchmesser der Niederdruckturbine überzuleiten, was mit Hilfe eines sogenannten Übergangskanals geschieht.

Solche Triebwerke haben ferner hohe Bypassverhältnisse und niedrige Drehzahlen der gegenüber der Hochdruckturbinenwelle in der Regel getrennten Niederdruckturbinenwelle; ferner besteht der Zwang, die Kerntriebwerke immer kompakter und leistungsstärker auszubilden, was zu immer längeren axial sich erstreckenden Übergangskanälen führt mit größeren Unterschieden der hierbei zu berücksichtigenden Radien der Kanalquerschnitte.

Aus der DE 37 00 668 A1 ist eine solche Anordnung bekannt, die als "Übergangskanaldichtvorrichtung" bezeichnet ist. Die innere Wand (16) des Übergangskanals ist aus mehreren Segmenten (18) aufgebaut, die mit den inneren Deckbändern (20) der Leitschaufelgruppen (22) verschraubt sind. Mit den Segmenten (18) sind weitere, kegelförmige Teile (34, 42) mit Dichtelementen (40, 70) verschraubt. Die Verbindung zwischen dem hinteren Kegel (42) und den Segmenten (18) lässt eine begrenzte, axiale und radiale Relativbewegung zu, wobei der Kegel (42) Schlitze (46) aufweist, in denen Schrauben (32) mit Spiel geführt sind. Somit tragen die Leitschaufelgruppen (22) die Segmente (18) und Kegel (34, 42), wobei nichts über die Befestigung der Leitschaufelgruppen (22) am äußeren Turbinengehäuse gesagt ist.

Die DE 24 35 071 C1 schützt eine Statorschaufel für ein Gasturbinenstrahltriebwerk, d.h. eine Leitschaufel. Die Leitschaufel (20) befindet sich am stromabwärtigen Ende der Verbrennungseinrichtung (12) stromaufwärts eine Turbinenrotorstufe (16) der Hochdruckturbine. Wegen der hohen Gastemperaturen unmittelbar hinter der Brennkammer ist die Leitschaufel (20) luftgekühlt ausgeführt. Der Druck der Kühlluft wird auch dazu benutzt, die mehrteilige Schaufelkonstruktion im Betrieb zu stabilisieren und auszurichten. Somit liegen hier keine integralen, eigenstabilen Leitschaufelsegmente vor.

Die GB 2 260 789 A betrifft eine Anordnung zur Befestigung von Leitschaufelsegmenten. Die Leitschaufelsegmente (10) sind nur über ihre äußere Plattform, d.h. ihr äußeres Deckband (12), am Turbinengehäuse befestigt und geführt. Hierzu weist jedes Deckband (12) am stromaufwärtigen Ende einen im Längsschnitt hakenförmigen Flansch (30) auf, der sich einseitig radial an einem Gehäuseteil (32) abstützt. Am stromabwärtigen Ende ist jedes Deckband (12) mit einer Nase (26), einem Haken (22) und einer Aussparung (24) versehen. Jede Nase (26) greift in Umfangsrichtung in die Aussparung (24) des benachbarten Leitschaufelsegments (10). Zwischen Nase (26), Aussparung (24) und Haken (22) verbleibt ein kleiner Freiraum, in den ein gehäusefester Stift (28) axial eingreift. Dieser Bereich übernimmt eine radiale Fixierung sowie eine Verdrehsicherung in Umfangsrichtung. Weiterhin liegen die Deckbänder hier axial an einem Gehäuseteil (18) an. Im Bereich dieser Führungselemente (22, 24, 26, 28) ist die Konstruktion relativ komplex sowie festigkeitstechnisch problematisch.

Die US 4384822 betrifft eine Anordnung zur Befestigung von Leitschaufelsegmenten mit den Merkmalen des oberbegriffs des Anspruchs 1.

Hier setzt nun die Erfindung ein, deren Aufgabe es ist, eine kostengünstige, einfach zu montierende und gut abzudichtende sowie zugleich gewichtssparende Anordnung zur Befestigung eines einen Teil eines Übergangskanals bildenden Leitschaufelsegmentes zu schaffen.

Diese Aufgabe ist erfindungsgemäß durch die kennzeichnenden Merkmale des Patentanspruchs 1 gelöst.

Weitere Merkmale der Erfindung ergeben sich aus dem Unteranspruch 2.

Die erfindungsgemäße Ausbildung weist eine Reihe von Vorteilen auf. So ist über die gerade Flächenberührung zwischen Stegen und Lagerflächen von Gehäuse und Lagerträger eine einfache und betriebssichere Abdichtung der Leitschaufelsegmente innen- und außenseitig und damit zum Scheibenraum zwischen Hochdruck- und Niederdruckturbine möglich. Durch die Nut-Hakenverbindung im vorderen Bereich der äußeren Plattform des Leitschaufelsegmentes werden diese sicher und dauerhaft im Turbinen-Gehäuse radial gehalten und mittel der in die Nut-Hakenverbindung eingreifenden Stifte in Umfangsrichtung fixiert. Die am Turbinen-Gehäuse befindliche Lagerstelle für die Aufnahme des Leitschaufelsegmentes kann gleichzeitig als Lagerstelle für ein an dieser Lagerstelle ebenfalls angreifendes Kanalsegment des Übergangskanals dienen, sodass das montierte Leitschaufelsegment des Übergangkanals Verriegelungselement für das vorgeschaltete Kanalsegment ist.

Durch die erfindungsgemäße Anordnung der Nuten der Nuten-Hakenverbindung an dem Gehäuse und die Anordnung der Haken an dem außen befindlichen Plattformteil des Kanalsegments wird eine einfache und genaue Fertigung dieser Teile ermöglicht, was zu signifikanten Gewichts- und Kostenvorteilen führt.

Die Erfindung ist nachfolgend anhand eines in der Zeichnung mehr oder minder schematisch dargestellten Ausführungsbeispiels beschrieben.

Es zeigen:
- Fig. 1: einen Teilschnitt durch eine nur teilweise dargestellte zweistufige Fluggasturbine im Bereiche des Leitschaufeln aufweisenden Übergangkanals zwischen Hochdruck- und Niederdruckteil,
- Fig. 2: einen Ausschnitt aus Fig. 1 betreffend den Bereich der Leitschaufeln;
- Fig. 3: eine perspektivische Ansicht des Bereichs der Leitschaufeln nach Fig. 2 und
- Fig. 4: eine Einzelheit in vergrößerter Darstellung.

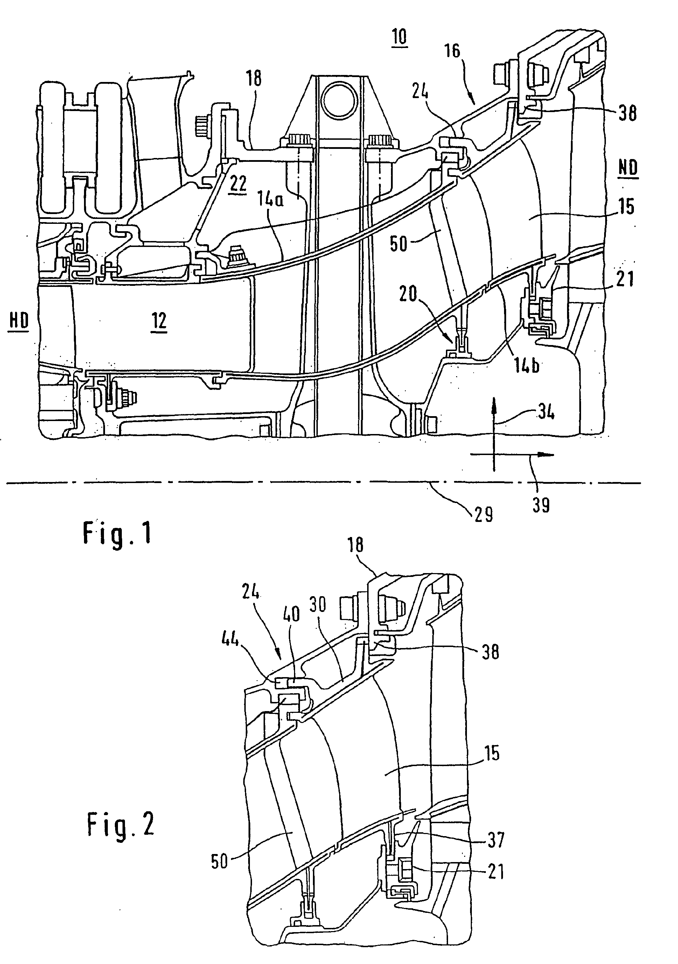

Einen in Fig. 1 nur im Übergangsbereich zwischen Hochdruckturbine HD und Niederdruckturbine ND schematisch dargestellte Fluggasturbine 10 ist von einem als Ringkanal ausgebildeten Strömungskanal 12 durchsetzt, der von dem kleinen Durchmesser des Hochdruckteils HD zum größeren Durchmesser des Niederdruckteils ND führt. Diese Überleitung erfolgt über einen Überleitungskanal 14, der stromab ein Kanalsegment 14a und stromauf ein eine Vielzahl von Leitschaufeln 15 haltendes besonders ausgebildetes Kanalsegment 14b umfasst, das nachfolgend als Leitschaufelsegment 16 bezeichnet ist.

Ein insgesamt mit der Bezugsziffer 18 bezeichnetes, in bekannter Weise aufgebautes Gehäuse umschließt Hoch- und Niederdruckteil der Turbine. Hier sind der im Kanalzwischenraum 22 befindliche Lagerträger 21 nahe der Dichtung 20 sowie die Lagerstellen 24, 35 und 38 von Interesse.

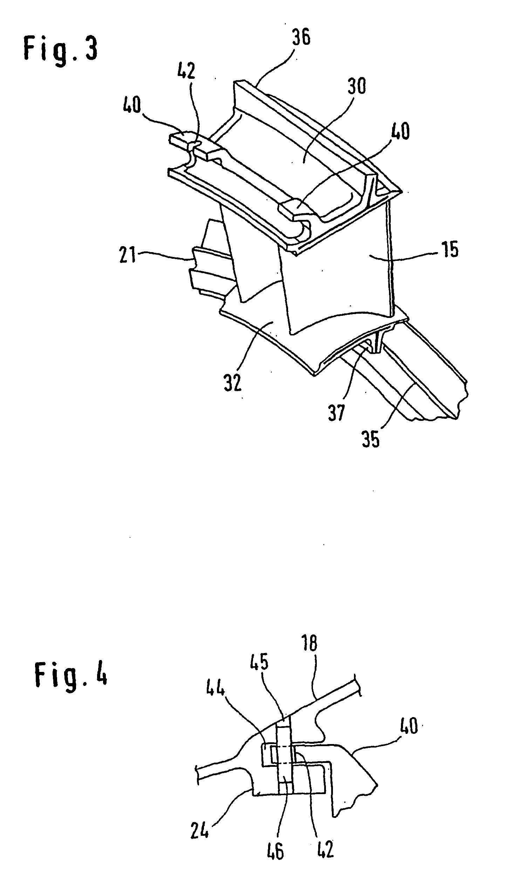

Das die Leitschaufeln 15 tragende Leitschaufelsegment 16 weist einen nach außen - zur Innenwandung des Gehäuses 18 - gerichtete äußere Plattform 30 und eine innere der Rotationsachse 29 der Fluggasturbine zugewandte Plattform 32 auf - vgl. insbesondere Fig. 3 -, die jeweils in Radialrichtung 34 sich erstreckende Stege 36 bzw. 37 tragen. Diesen Stegen sind Lagerflächen 38 bzw. 35 am Gehäuse 18 bzw. am Lagerträger 21 - vgl. Fig. 2 - zugeordnet, an dem sich die Stege im zusammengebauten Zustand der Fluggasturbine axial abstützen.

Die Plattform 30 weist ferner stromab hakenförmig entgegen der Axialrichtung 39 gebogene Vorsprünge 40 auf, von denen ein Vorsprung mit einem Schlitz 42 versehen ist, vgl. Fig. 3. Diesen Vorsprüngen 40 sind korrespondierende Nuten 44 zugeordnet, welche sich in den Lagerstellen 24 des Gehäuses 18 befinden; vgl. auch Fig. 4. Eine dieser Nuten ist mit einem dem Schlitz 42 zugeordneten Durchbruch 45 versehen zwecks Aufnahme eines Stiftes 46, wie dies ebenfalls aus Fig. 4 deutlich erkennbar ist.

Die Nuten 44 im Zusammenwirken mit den hakenförmigen Vorsprüngen 40 bilden eine sogenannte Nut-Hakenverbindung, die ein formschlüssiges Fixieren des Leitschaufelsegmentes 16 im Turbinengehäuse ermöglicht, wobei mittels des Stiftes 46 dieses Segment auch gegen Verdrehen um die Rotationsachse 29 gesichert ist.

Die Ausbildung der Stege 36 und 37 der äußeren und inneren Plattform 30 und 32 sowie der zugeordneten Lagerflächen an den gehäusefesten Lagerstellen 24 und dem Lagerträger 21 ist derart, dass jeweils gerade Flächenberührung zwischen diesen Flächen vorhanden ist, was eine betriebssichere Abdichtung an den Berührungsstellen und damit zu dem Scheibenraum der Niederdruckturbine ermöglicht.

Nach dem Einbau des Leitschaufelsegmentes bildet dieses eine Verriegelung für das vorgelagerte Kanalsegment 14a, das über eine Strebenverkleidung 50 u. a. an den Lagerstellen 24 des Gehäuses 18 gelagert ist.

Die vorstehend beschriebene Anordnung mit der Nut-Hakenverbindung ermöglicht also ein gewichts- und kostengünstiges sowie einfach zu handhabendes lösbares kraft- und formschlüssiges Einsetzen des Leitschaufeln aufweisenden Übergangkanals in den Scheibenraum zwischen Hoch- und Niederdruckteil der vorzugsweise als Zweiwellenturbine ausgebildeten Fluggasturbine. Die gerade Linienberührung zwischen den Stegen des Leitschaufelsegmentes und den zugeordneten Lagerflächen ermöglicht darüber hinaus ein einfaches Abdichten dieses Segmentes.

## Patentansprüche

1. Anordnung zur Befestigung eines einen Teil eines Übergangskanals bildenden Leitschaufelsegmentes (16) zwischen Gehäuse (18) und Lagerträger (21) eines Turbinengehäuses einer eine Hoch- und eine Niederdruckturbine mit unterschiedlichen Durchmessern aufweisenden Fluggasturbine, vorzugsweise einer Zweiwellen-Fluggasturbine, deren Übergangskanal vom kleineren Durchmesser der Hochdruckturbine zum größeren Durchmesser der Niederdruckturbine überleitet, wobei das Leitschaufelsegment (16) eine äußere und eine innere, die Leitschaufeln (15) einspannende Plattform umfasst die Plattformen (30, 32) zur axialen Positionierung und Abdichtung des Leitschaufelsegments (16) Stege (36, 37) aufweisen, die jeweils eine gerade Flächenberührung mit Lagerflächen (35, 38) des Lagerträgers (21) und des Gehäuses (18) ermöglichen, das Leitschaufelsegment (16) mittels einer stromaufliegenden, der äußeren Plattform (30) zugeordneten Nut-Hakenverbindung (40,44) an dem Gehäuse (18) radial gehalten und **dadurch gekennzeichnet, dass** das Leitschaufelsegment (16) mittels eines in die Nut-Hakenverbindung eingreifenden Stiftes (46) gegen Verdrehen gesichert ist, und dass die Nuten (44) der Nut-Hakenverbindung Lagerstellen (24) des Gehäuses (18), die Haken (40) der äußeren Plattform (30) des Leitschaufelsegmentes (16) zugeordnet sind.

2. Anordnung nach Anspruch 1, **dadurch gekennzeichnet, dass** die die Nuten (44) der Nut-Hakenverbindung aufweisenden Lagerstellen (24) des Gehäuses (18) gleichzeitig Lagerstellen für das vorgelagerte Kanalsegment (14a) des Übergangskanals (16) bilden, das in seiner Einbaulage durch das Leitschaufelsegment (16) verriegelt ist.

## Claims

1. Arrangement for fixing a guide vane segment (16) that forms part of a transition channel between the housing (18) and the mounting support (21) of a turbine housing of an aircraft gas turbine that comprises a high-pressure and a low-pressure turbine section with different diameters, preferably a dual-shaft aircraft turbine, whose transition channel leads from the smaller diameter of the high-pressure turbine section to the larger diameter of the low-pressure turbine section, the guide vane segment (16) comprising an outer and an inner platform that clamp the guide vanes (15), the said platforms (30, 32) having webs (36, 37) for the axial positioning and sealing of the guide vane segment (16), the said webs respectively enabling a flush surface contact with bearing surfaces (35, 38) of the mounting support (21) and of the housing (18), the guide vane segment (16) being held radially on the housing (18) by means of an upstream groove-and-hook joint (40, 44) associated with the outer platform (30), and **characterised in that** the guide vane segment (16) is secured against twisting by means of a pin (46) that engages in the said groove-hook joint, and the grooves of the groove-hook joint are associated with bearing points (24) of the housing (18) and the hooks (40) with the outer platform (30) of the guide vane segment (16).

2. Arrangement according to Claim 1, **characterised in that** the bearing points (24) of the housing (18) that comprise the grooves (44) of the groove-hook joint at the same time form bearing points for the upstream channel segment (14a) of the transition channel (16) which, in its assembled position, is locked by the guide vane segment (16).

## Revendications

1. Dispositif de fixation d'un segment d'aube directrice (16) formant une partie d'un canal de transition entre un carter (18) et un support de palier (21) d'un carter de turbine d'une turbine à gaz d'avion, présentant une turbine haute pression et une turbine basse pression de différents diamètres, de préférence d'une turbine à gaz d'avion à deux arbres, dont le canal de transition passe du plus petit diamètre de la turbine haute pression au plus grand diamètre de la turbine basse pression, le segment d'aube directrice (16) comprenant une plate-forme extérieure et une plate-forme intérieure serrant les aubes directrices (15), les plates-formes (30, 32) présentant pour le positionnement axial et l'étanchéification du segment d'aube directrice (16) des nervures (36, 37), qui permettent respectivement un contact plan rectiligne avec des surfaces d'appui (35, 38) du support de palier (21) et du carter (18), le segment d'aube directrice (16) étant maintenu radialement au carter (18) au moyen d'une liaison rainure-crochet (40, 44) sur l'écoulement, associée à la plate-forme extérieure (30), **caractérisé en ce que** le segment d'aube directrice (16) est bloqué contre la rotation au moyen d'une broche (46) prenant dans la liaison rainure-crochet et **en ce que** les rainures (44) de la liaison rainure-crochet sont associées à des points d'appui (24) du carter (18), les crochets (40) à la plate-forme (30) extérieure du segment d'aube directrice (16).

2. Dispositif selon la revendication 1, **caractérisé en ce que** les points d'appui (24) du carter (18) présentant les rainures (44) de la liaison rainure-crochet forment en même temps des points d'appui pour le segment de canal (14a) amont du canal de transition (16), lequel segment est verrouillé dans sa position de montage par le segment d'aube directrice (16).
